# EUROPÄISCHE PATENTSCHRIFT

(11) **EP 0 954 175 B1**
(45) Veröffentlichungstag und Bekanntmachung des Hinweises auf die Patenterteilung: **08.02.2006**
(21) Anmeldenummer: 99201282.3
(22) Anmeldetag: 23.04.1999
(51) Int. Cl.: H04N 7/088

(54) **Teletext mit Transparent-Funktion**
Teletext with transparent function
Télétexte comprenant la fonction de transparence

(30) Priorität: 02.05.1998 DE 19819669
(43) Veröffentlichungstag der Anmeldung: 03.11.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Plog, Jürgen, 22335 Hamburg (DE)
(74) Vertreter: von Laue, Hanns-Ulrich

(56) Entgegenhaltungen:
- US-A- 4 595 952
- US-A- 4 804 948
- US-A- 5 579 057

## Beschreibung

Die Erfindung betrifft ein Verfahren zur Darstellung von in Bereiche unterteilten Grafiken mit einem Vordergrund und einem Hintergrund, welche jeweils bereichsweise auf eine wählbare Farbe schaltbar sind, und wobei Grafikbereiche transparent auf wenigstens eine andere Darstellungsebene schaltbar sind.

Derartige Grafik-Darstellungen werden insbesondere bei dem Teletext bei Fernsehgeräten eingesetzt. Der Teletext weist einen Vordergrund auf, bei dem es sich meist um dargestellte Buchstaben oder andere Grafiken handelt. Der Hintergrund ist in der Regel eine farbige Fläche, die auch in verschiedenen Bereichen verschiedene Farben aufweisen kann. Darüber hinaus ist für derartige Teletext-Darstellungen bekannt, den Vordergrund und/oder den Hintergrund transparent schalten zu können. Dies bedeutet, daß in den jeweils transparent geschalteten Bereichen des Vordergrunds und/oder des Hintergrunds nicht dieser Vordergrund bzw. Hintergrund dargestellt wird, sondern eine andere Darstellungsebene. Bei dieser anderen Darstellungsebene kann es sich beispielsweise um ein Videobild handeln, das in den transparent geschalteten Bereichen sichtbar wird.

Bei den nach dem Stande der Technik bekannten Verfahren zur Transparentschaltung werden in dem Darstellungsspeicher zusätzliche Bits als Transparent-Bits abgespeichert. Es besteht auch die Möglichkeit, eine spezifische Farbe, die im Darstellungsspeicher abgespeichert wird, für die Transparentschaltung zu benutzen. In beiden Fällen sind zusätzliche Speicherstellen erforderlich, die für die Transparentschaltung reserviert sind. Entweder es werden Attribut-Bits im Darstellungsspeicher für die Transparentdarstellung reserviert oder es werden Speicherstellen in einem Farbspeicher reserviert, die der Farbe zugeordnet sind, bei der tatsächlich transparent geschaltet wird.

Dokument US-A-4,804,948 offenbart ein Videodarstellungssteuersystem, in dem einer der Farbencodes entweder als Farbencoderepräsentant der Transparentdarstellung oder als Farbencoderepräsentant einer spezifischen Farbe verwendet werden kann. Die Zentraleinheit ist verantwortlich für die Umschaltung zwischen den beiden Modi.

Es ist Aufgabe der Erfindung, ein Verfahren zur Transparentschaltung bei derartigen Grafikanwendungen anzugeben, das für die Transparentschaltung keinen zusätzlichen Speicherbedarf erfordert.

Diese Aufgabe ist erfindungsgemäß dadurch gelöst, daß bereichsweise ein Vergleich einer in dem Bereich gewählten Vordergrundfarbe und einer in dem Bereich gewählten Hintergrundfarbe vorgenommen wird und daß diejenigen Bereiche des Vordergrunds und/oder des Hintergrunds der Grafik transparent geschaltet werden, in welchen eine vorgegebene Konstellation von gewählter Vordergrundfarbe und gewählter Hintergrundfarbe festgestellt wird.

Bei dem erfindungsgemäßen Verfahren wird für die Transparentschaltung entsprechender Bereiche eines Vordergrunds und/oder eines Hintergrunds einer Grafikdarstellung kein zusätzlicher Speicherbedarf benötigt, da für die Transparencschaltung keine zusätzlichen Bits oder keine spezifische Farbe eingesetzt wird. Vielmehr wird auf die Konstellation der gewählten Vordergrundfarbe und der gewählten Hintergrundfarbe abgehoben. Es können bestimmte Kombinationen von Vodergrundfarbe und Hintergrundfarbe vorgegeben werden, bei deren Auftreten die entsprechenden Bereiche transparent geschaltet werden. Dafür können vorteilhaft Konstellationen von Vordergrundfarbe und Hintergrundfarbe gewählt werden, die ohnehin nicht auftreten oder nicht sinnvoll sind, die also für die normale Grafikdarstellung nicht benutzt werden. Dieser Vergleich wird für die einzelnen Bereiche der Grafikdarstellung individuell vorgenommen, so daß bereichsweise transprarent geschaltet wird oder nicht.

Es ist damit gelungen, die ohnehin notwendigen Speicherbits für die Farben des Vordergrunds und/oder des Hintergrunds für die Transparentschaltung zusätzlich zu nutzen.

Die Ausgestaltung der Erfindung gemäß Anspruch 2 nutzt die Tatsache, daß eine identische Vorder- und Hintergrundfarbe in der Grafikdarstellung bzw. einer Teletextdarstellung ohnehin nicht erkennbar wären und nutzt diese Konstellation zur Transparentschaltung. Damit tritt für die Grafikdarstellung keinerlei Einschränkung möglicher Kombinationen von Vorder- und Hintergrundfarbe ein, da eine Grafik mit identsichern Vorder- und Hintergrund ohnehin nicht erkennbar ist.

Die weitere Ausgestaltung der Erfindung gemäß Anspruch 3 entwickelt das Verfahren dahingehend weiter, daß nicht nur statisch in den einzelnen Bereichen eine Prüfung der Konstellation von Vorder- und Hintergrundfarbe vorgenommen wird, sondern daß auch der Wechsel der Vorder- und Hintergrundfarben von einem zweiten Bereich in einen ersten Bereich geprüft werden. Je nach Wechsel der Vorder- und Hintergrundfarben von dem zweiten Bereich in den ersten Bereich kann eine Entscheidung darüber getroffen werden, ob nur der Vordergrund, nur der Hintergrund, beide oder keiner der beiden transparent geschaltet wird. Es wird also die Veränderung der Vorder- und Hintergrundfarben als zusätzliches Kriterium für die Transparentschaltung einbezogen, wobei auch eine Entscheidung einzeln für Vordergrund und Hintergrund möglich ist.

Die weiteren Ausgestaltungen des Verfahrens gemäß den Ansprüchen 4, 5 und 6 geben vorteilhafte Konstellationen für die Transparentschaltung an, wobei die Veränderung von gewählter Vorder- und/oder Hintergrundfarbe zur Entscheidung mit herangezogen werden.

Wie eine weitere Ausgestaltung der Erfindung nach Anspruch 7 vorsieht, kann das erfindungsgemäße Verfahren insbesondere vorteilhaft für Teletext verwendet werden, bei dem in der Regel der Wunsch besteht, eine Transparentfunktion zu implementieren, die erfindungsgemäß ohne zusätzlichen Speicherbedarf realisiert werden kann.

Nachfolgend wird anhand der Zeichnung ein Ausführungsbeispiel der Erfindung näher erläutert. Es zeigen:
Fig. 1 ein Blockschalrbild einer Schaltungsanordnung, welche nach dem erfindungsgemäßen Verfahren arbeitet und
Fig. 2 eine graphische Darstellung der Entscheidungskriterien, nach denen die Erkennungsschaltung der Schaltungsanordnung gemäß Fig. 1 arbeitet.

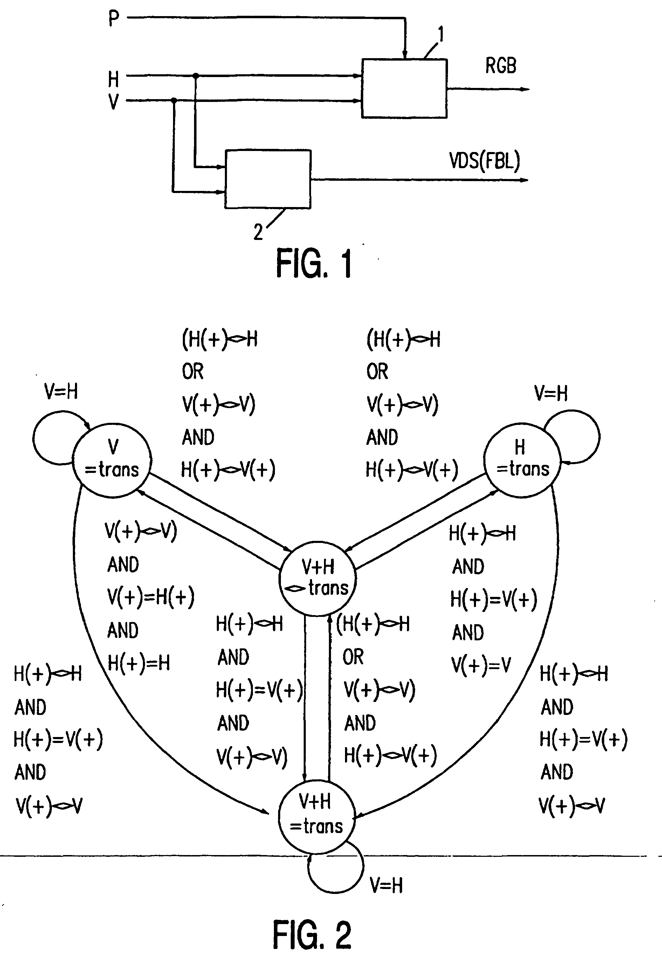

Das Blockschaltbild gemäß Fig. 1 zeigt eine Schaltungsanordnung zur Farberzeugung 1. Diese Schaltungsanordnung dient dazu, die eigentliche Farbdarstellung für eine Grafikdarstellung mit Vorder- und Hintergrund zu generieren.

Der Schaltungsanordnung 1 werden, beispielsweise aus einem in der Figur nicht dargestellten Speicher, bereichsweise eine Vordergrundfarbe V und eine Hintergrundfarbe H zugeführt. Es handelt sich hierbei um entsprechende Bits, die die jeweiligen gewählten Farben bereichsweise signalisieren.

Der Schaltungsanordnung 1 zur Farberzeugung wird ferner ein Schaltsignal P zugeführt, in Abhängigkeit dessen die Schaltungsanordnung bereichsweise zwischen Vorder- und Hintergrundfarbe schaltet. Es wird damit bereichsweise gewählt, ob der Vorder- oder der Hintergrund dargestellt werden soll. Die Größe der Bereiche, in denen zwischen Vorder- und Hintergrundfarbe schaltbar ist, kann beliebig klein gewählt werden, bis auf Pixelgröße herunter.

Die Schaltungsanordnung 1 liefert somit ausgangsseitig ein Grafiksignal, das in dem Ausführungsbeispiel sich aus drei Grundfarben Rot, Grün und Blau zusammensetzt, welche auf einem Display darstellbar sind. Die dargestellte Grafik enthält Vordergrundelemente und Hintergrundelemente. Bei einer Teletextdarstellung handelt es sich bei den Vordergrundelementen beispielsweise um Buchstaben oder andere Grafikelemente, wohingegen die Hintergrundfarben im allgemeinen einen flächigen Hintergrund gegebenenfalls wechselnder Farbe bilden.

Vielfach besteht der Wunsch, in eine solche Teletextdarstellung eine Transparentfunktion zu integrieren. Diese gestattet es beispielsweise den Vordergrund und/oder den Hintergrund bereichsweise oder insgesamt transparent zu schalten. Die transparent geschalteten Bereiche der Grafik werden nicht dargestellt; statt dessen wird in diesen Bereichen eine andere Darstellungsebene dargestellt, bei der es sich beispielsweise um ein Bildsignal handeln kann.

Bei den Verfahren nach dem Stande der Technik wären hinzu in den Signalen H und V spezielle Bits erforderlich, die die Transparentschaltung signalisieren. Dies soll durch das erfindungsgemäße Verfahren vermieden werden.

Dazu ist eine Erkennungsschaltung 2 vorgesehen, welcher die die gewähletn Vorder- und Hintergrundfarben signalisierenden Signale H und V zugeführt werden. Die Erkennungsschaltung 2 ihrerseits liefert ein mit VDS gekennzeichnetes Signal, welches in einer nachgeschalteten, in der Figur nicht dargestellten Schaltung zwischen dem Ausgangssignal der Schaltung 1 zur Farberzeugung und einem Bildsignal umschaltet. Damit wird durch diese Umschaltung bereichsweise von der Grafik auf ein Bildsignal bzw. umgekehrt geschaltet, wobei diejenigen Bereiche, die auf das Bildsignal geschaltet werden, die transparent geschalteten Bereiche darstellen.

Die Erkennungsschaltung kann im einfachsten Falle einen einfachen Vergleich zwischen Vorder- und Hintergrundfarbe vornehmen. Treten bestimmte festgelegte Konstellationen zwischen gewählter Vorder- und gewählter Hintergrundfarbe auf, die transparent zu schaltende Bereiche signalisieren, liefert die Erkennungsschaltung 2 das Signal VDS, so daß in diesen Bereichen von der Grafik auf die Bilddarstellung umgeschaltet wird, d.h. also in diesen Bereichen die Grafik transparent geschaltet wird.

Beispielsweise kann die Erkennungsschaltung auf einfache Identität von Vordergrundfarbe und Hintergrundfarbe prüfen und bei Vorliegen der Identität für die entsprechenden Bereiche, in denen diese Identität vorliegt, das Signal VDS zur Transparentschaltung bzw. Umschaltung auf eine andere Darstellungsebene liefern.

Darüber hinaus können auch bestimmte Übergänge von Vorder- und Hintergrundfarbe zwischen benachbarten Bereichen ausgewertet werden. Es wird also beispielsweise in einem ersten Bereich, in dem darüber zu entscheiden ist, ob dieser Bereich transparent geschaltet wird oder nicht, nicht nur die Vorder- und Hintergrundfarbe dieses Bereiches, sondern auch diejenigen Farben eines benachbarten zweiten Bereiches ausgewertet. Der Übergang der Farben zwischen diesem zweiten Bereich und dem ersten Bereich, für den die Entscheidung zur Transparentschaltung zu treffen ist, kann zusätzlich ausgewertet werden. Darüber hinaus wird auch bei dieser Prüfung der Farbübergänge eine Feststellung der Farben in den ersten Bereichen die Entscheidung mit eingehen.

Die Einbeziehung der Farbübergänge zwischen benachbarten Bereichen gestattet es, auch eine Entscheidung darüber zu treffen, ob nur der Vordergrund, nur der Hintergrund, beide oder keiner der beiden transparent geschaltet wird.

Die Entscheidung über die Transparentschaltung kann dabei beispielsweise so aussehen, daß eine Vordergrundfarbe, die in dem zweiten Bereich eine andere Farbe hatte als die Hintergrundfarbe dieses Bereiches, in dem ersten Bereich dann transparent zu schalten ist, wenn sie in dem ersten Bereich identisch mit der Hintergrundfarbe dieses Bereiches ist. Ein entsprechendes Entscheidungskriterium kann auch für eine sich von dem Übergang des zweiten Bereiches in den ersten Bereich ändernde Hintergrundfarbe getroffen werden. Auch wenn sich Vorder- und Hintergrundfarben bei diesem Übergang gleichzeitig ändern gilt entsprechendes.

In Fig. 2 ist ein Diagramm dargestellt, welches vorteilhafte Entscheidungskriterien symbolisiert, die für Farbübergänge von Vorder- und Hintergrundfarben von dem zweiten Bereich in den ersten Bereich gelten. Darüber hinaus werden auch hier die Farben des Vordergrunds und des Hintergrunds in dem ersten Bereich ausgewertet.

In dem Diagramm geben die Kreise jeweils einen Zustand an, in dem Vordergrund und/oder Hintergrund transparent geschaltet sind oder in dem weder Vordergrund noch Hintergrund transparent geschaltet sind. Die Übergänge zwischen den Kreisen sind jeweils mit Entscheidungskriterien versehen, bei deren Eintreten der entsprechende Übergang durch die Erkennungsschaltung der Schaltung gemäß Fig. 1 gewählt wird.

Der Übergang von einem der Kreise zu dem anderen der Kreise entspricht jeweils dem oben erläuterten Übergang von einem benachbarten zweiten Bereich in einen ersten Bereich der Grafik, für den die Entscheidung zur Transparentschaltung zu treffen ist.

Die Entscheidungskriterien in der Fig. 2 sind in der Weise aufgetragen, daß V (+) beispielsweise die Vordergrundfarbe des ersten Bereiches und V ohne Zusatz die Vordergrundfarbe des zweiten Bereiches darstellt. Entsprechendes gilt für die Bezeichnung der Hintergrundfarben.

Liegt beispielsweise für den zweiten Bereich eine Darstellung entsprechend des mittleren Kreises vor, so sind weder Vordergrundfarbe noch Hintergrundfarbe in dem entsprechenden Bereich transparent geschaltet, d.h. also sowohl Vorder- und Hintergrundfarbe der Grafik werden dargestellt. Von dieser Darstellung in dem zweiten Bereich der Grafik wird für den ersten Bereich der Grafik auf eine Darstellung gewechselt, bei der der Hintergrund transparent ist, wenn das in dem entsprechenden Fall eingetragene Kriterium der Fig. 2 erfüllt ist. In diesem Beispielsfall ist dieses Kriterium erfüllt, wenn die gewählten Hintergrundfarben des zweiten und des ersten Bereiches verschiedene sind, wenn sich die Vordergrundfarbe in beiden Bereichen nicht verändert hat und wenn im ersten Bereich Vorder- und Hintergrundfarbe identisch sind. Mit anderen Worten bedeutet dies, daß sich zwischen dem zweiten und dem ersten Bereich nur die Hintergrundfarbe geändert hat und im ersten Bereich identisch mit der Vordergrundfarbe ist. In diesem Falle würde also der Zustand, der in dem Kreis oben rechts symbolisiert ist, erreicht werden, welcher darin besteht, daß der Hintergrund transparent geschaltet wird.

Ausgehend von dem Zustand, der durch den mittleren Kreis symbolisiert ist, in dem weder Vordergrund noch Hintergrund transparent geschaltet sind, würde dann zu dem Zustand, in dem der Vordergrund transparent geschaltet ist, entsprechend dem oberen linken Kreis der Darstellung gemäß Fig. 2 umgeschaltet werden, wenn sich von dem zweiten Bereich zum ersten Bereich die Vordergrundfarbe verändert hat, die Hintergrundfarbe nicht verändert hat und in dem ersten Bereich Vorder- und Hintergrundfarbe identisch werden.

Ferner würde von einer Darstellung entsprechend der Symbolisierung des mittleren Kreises auf eine Darstellung gewechselt werden, in der sowohl Vorder- wie auch Hintergrund transparent geschaltet werden, wenn sich zwischen dem zweiten und dem ersten Bereich sowohl die Vordergrundfarbe wie auch die Hintergrundfarbe ändern und in dem ersten Bereich identisch sind.

Von der Darstellung entsprechend dem unteren Kreis, in der sowohl Vordergrund wie auch Hintergrund transparent geschaltet sind, wird unter der Bedingung wieder auf die Darstellung entsprechend dem mittleren Kreis übergegangen, bei der weder Vordergrund noch Hintergrund transparent geschaltet sind, wenn sich zwischen den beiden Bereichen entweder die Hintergrundfarbe oder die Vordergrundfarbe ändert und wenn sie in dem ersten Bereich ungleich werden. Bleiben hingegen Vorder- und Hintergrundfarbe identisch, bleibt die transparente Darstellung beider Bereiche enthalten.

Von einer Darstellung entsprechend dem oberen linken Kreis, bei der der Vordergrund transparent geschaltet ist, wird auf die Darstellung entsprechend dem mittleren Kreis übergegangen, bei welcher weder Vorder- noch Hintergrund transparent geschaltet sind, wenn sich zwischen den beiden Bereichen die Hintergrundfarbe verändert hat oder sich die Vordergrundfarbe verändert hat und wenn darüber hinaus in dem ersten Bereich beide Farben ungleich sind. Haben sich hingegen zwischen den beiden Bereichen Hinter- und Vordergrundfarbe geändert und sind sie darüber hinaus in dem ersten Bereich identisch, so wird auf eine Darstellung gewechselt, bei der Vorder- und Hintergrundfarbe transparent geschaltet sind. Bleiben hingegen Vorder- und Hintergrundfarbe identisch, so wird bei der Darstellung des transparenten Vordergrundes geblieben.

In entsprechender Weise sind Entscheidungskriterien vorgesehen, die ausgehend von einer Darstellung mit transparent geschaltetem Hintergrund entsprechend der Symbolisierung des rechten oberen Kreises auf eine andere Darstellung gelten. Von dieser Darstellung ausgehend wird auf eine Darstellung übergegangen, bei der weder Vordergrund noch Hintergrund transparent geschaltet sind, wenn sich zwischen den Bereichen entweder die Vordergrundfarbe oder die Hintergrundfarbe ändert und wenn sie in dem ersten Bereich identisch werden. Auf eine Darstellung mit transparentem Vorder- und Hintergrund würde dann übergegangen, wenn sich Hinter- und Vordergrundfarbe geändert haben und identisch werden. Es gelten also insoweit für die Darstellung mit transparentem Hintergrund die gleichen Entscheidungskriterien für die Übergänge auf die anderen Zustände wie für die Darstellung mit transparentem Vordergrund.

Bei diesen Entscheidungskriterien werden also einerseits die Vorder- und Hintergrundfarben des ersten Bereiches zur Entscheidung herangezogen. Darüber hinaus wird der Wechsel der Farben von dem benachbarten zweiten Bereich zu dem ersten Bereich zur Entscheidung herangezogen. Beide Entscheidungskriterien gemeinsam führen dann letztlich zu der Entscheidung, ob in dem ersten Bereich eine transparente Darstellung des Vorder- und/oder des Hintergrunds vorzunehmen ist.

Grundsätzlich genügt bereits eine rein statische Auswertung auf bestimmte Vorder- oder Hintergrundfarben zur Transparentschaltung. Im einfachsten Falle wird auf Identität zwischen Vorder- und Hintergrundfarbe in dem ersten Bereich überprüft und bei Vorliegen der Identität eine Transparentschaltung des Vorder- und/oder des Hintergrundes vorgenommen. Durch die zusätzlichen Kriterien, die die Übergänge auswerten, kann darüber hinaus gezielt eine Transparentschaltung des Vordergrundes, des Hintergrundes oder beider vorgenommen werden, abhängig davon, ob sich Vorder- oder Hintergrundfarbe verändert hat und in dem ersten Bereich eine bestimmte Konstellation beider Farben eizielt wird. Es kann also abhängig davon, welche der beiden Farben sich verändert hat eine Auswahl getroffen werden, ob Vorder- oder Hintergrund transparent geschaltet werden.

Damit wird eine äußerst flexible Schaltmöglichkeit der Transparentfunktion geboten, ohne daß zusätzliche Bits in den Signalen HV und damit zusätzliche Speicherbits erforderlich sind.

## Patentansprüche

1. Verfahren zur Darstellung von in Bereiche unterteilten Grafiken mit einem Vordergrund und einem Hintergrund, welche jeweils bereichsweise auf eine wählbare Farbe schaltbar sind, und wobei Grafikbereiche transparent auf wenigstens eine andere Darstellungsebene schaltbar sind, **dadurch gekennzeichnet,**
**daß** bereichsweise ein Vergleich einer in dem Bereich gewählten Vordergrundfarbe und einer in dem Bereich gewählten Hintergrundfarbe vorgenommen wird und daß diejenigen Bereiche des Vordergrunds und/oder des Hintergrunds der Grafik transparent geschaltet werden, in welchen eine vorgegebene Konstellation von gewählter Vordergrundfarbe und gewählter Hintergrundfarbe festgestellt wird.

2. Verfahren nach Anspruch 1, **dadurch gekennzeichnet,**
**daß** diejenigen Bereiche des Vordergrunds und/oder des Hintergrunds der Grafik transparent geschaltet werden, in welchen für den Vordergrund und den Hintergrund jeweils die gleiche Farbe ausgewählt ist.

3. Verfahren nach Anspruch 1, **dadurch gekennzeichnet,**
**daß** Veränderungen der gewählten Vordergrundfarbe und der gewählten Hintergrundfarbe zwischen einem ersten Bereich und einem diesem benachbarten, zweiten Bereich festgestellt werden und daß abhängig von der für den ersten Bereich gewählten Farben des Vordergrunds und des Hintergrunds und von den Veränderungen der gewählten Farben zwischen zweitem und erstem Bereich eine Entscheidung getroffen wird, ob der Vordergrund oder der Hintergrund transparent geschaltet wird.

4. Verfahren nach Anspruch 3, **dadurch gekennzeichnet,**
**daß** in einem ersten Bereich der Vordergrund transparent geschaltet wird, wenn sich die für diesen Bereich gewählte Vordergrundfarbe gegenüber der für einen benachbarten, zweiten Bereich gewählten Vordergrundfarbe geändert hat und wenn sie in dem ersten Bereich identisch mit der gewählten Hintergrundfarbe dieses Bereichs ist.

5. Verfahren nach Anspruch 3, **dadurch gekennzeichnet,**
**daß** in einem ersten Bereich der Hintergrund transparent geschaltet wird, wenn sich die für diesen Bereich gewählte Hintergrundfarbe gegenüber der für einen benachbarten, zweiten Bereich gewählten Hintergrundfarbe geändert hat und wenn sie in dem ersten Bereich identisch mit der gewählten Vordergrundfarbe dieses Bereichs ist.

6. Verfahren nach Anspruch 3, **dadurch gekennzeichnet,**
**daß** in einem ersten Bereich der Vordergrund und der Hintergrund transparent geschaltet werden, wenn sich die für diesen Bereich gewählten Farben für den Vordergrund und für den Hintergrund gegenüber den für einen benachbarten, zweiten Bereich gewählten Farben geändert haben und wenn die für den ersten Bereich gewählten Farben für Vordergrund und für Hintergrund identisch sind.

7. Verfahren nach Anspruch 1, **dadurch gekennzeichnet,**
**daß** es sich bei der Grafik um Videotext handelt, für dessen Zeichen Vordergrundfarben wählbar sind, wobei die Videotextzeichen vor einem Hintergrund darstellbar sind, dessen Farbe als Hintergrundfarbe wählbar ist und daß auf der anderen Darstellungsebene ein Bildsignal darstellbar ist.

8. Schaltungsanordnung zur Darstellung von in Bereiche unterteilten Grafiken mit einem Vordergrund und einem Hintergrund, welche jeweils bereichsweise auf eine wählbare Farbe oder transparent schaltbar sind, wobei transparent geschaltete Grafikbereiche auf wenigstens eine andere Darstellungsebene schaltbar sind, **dadurch gekennzeichnet,**
**daß** eine Erkennungsschaltung (2) vorgesehen ist, welche bereichsweise eine Prüfung auf Gleichheit einer in dem Bereich gewählten Vordergrundfarbe und einer in dem Bereich gewählten Hintergrundfarbe vornimmt und welche diejenigen Bereiche des Vordergrunds und/oder des Hintergrunds der Grafik transparent schaltet, in welchen eine vorgegebene Konstellation von gewählter Vordergrundfarbe und gewählter Hintergrundfarbe festgestellt wird.

9. Schaltungsanordnung nach Anspruch 8, **dadurch gekennzeichnet,**
**daß** die Erkennungsschaltung (2) diejenigen Bereiche des Vordergrunds und/oder des Hintergrunds der Grafik transparent schaltet, in welchen für den Vordergrund und den Hintergrund jeweils die gleiche Farbe ausgewählt ist.

10. Schaltungsanordnung nach Anspruch 8, **dadurch gekennzeichnet,**
**daß** die Erkennungsschaltung (2) Veränderungen der gewählten Vordergrundfarbe und der gewählten Hintergrundfarbe zwischen einem ersten Bereich und einem diesem benachbarten, zweiten Bereich feststellt und daß die Erkennungsschaltung abhängig von der für den ersten Bereich gewählten Farben des Vordergrunds und des Hintergrunds und von den Veränderungen der gewählten Farben zwischen zweitem und erstem Bereich den Vordergrund und/oder den Hintergrund transparent schaltet.

## Claims

1. A method of displaying graphics subdivided into areas with a foreground and a background, each of which is area-wise switchable to a selectable color, and in which graphics areas are transparently switchable to at least a different display plane, **characterized in that** a foreground color selected in the area and a background color selected in the area are compared area-wise, and **in that** those areas of the foreground and/or the background of the graphics are switched transparently in which a predetermined constellation of the selected foreground color and the selected background color is determined.

2. A method as claimed in claim 1, **characterized in that** those areas of the foreground and/or the background of the graphics are switched transparently in which the same color is selected for the foreground and the background.

3. A method as claimed in claim 1, **characterized in that** changes of the selected foreground color and the selected background color between a first area and a neighboring, second area are determined, and **in that**, dependent on the foreground and background colors selected for the first area and on the changes of the selected colors between the second and the first area a decision is made on whether the foreground or the background is switched transparently.

4. A method as claimed in claim 3, **characterized in that**, in a first area, the foreground is switched transparently when the foreground color selected for this area has changed with respect to the foreground color selected for a neighboring, second area and when it is identical in the first area to the selected background color of this area.

5. A method as claimed in claim 3, **characterized in that**, in a first area, the background is switched transparently when the background color selected for this area has changed with respect to the background color selected for a neighboring, second area and when it is identical in the first area to the selected foreground color of this area.

6. A method as claimed in claim 3, **characterized in that**, in a first area, the foreground and the background are switched transparently when the foreground and background colors selected for these areas have changed with respect to the color selected for a neighboring, second area and when the foreground and background colors selected for the first area are identical.

7. A method as claimed in claim 1, **characterized in that** the graphics are videotext for whose symbols foreground colors are selectable, the videotext symbols being displayable on a background whose color is selectable as a background color, and **in that** a picture signal is displayable on the other display plane.

8. A circuit arrangement for displaying graphics subdivided into areas with a foreground and a background, each of which is area-wise or transparently switchable to a selectable color, in which transparently switchable graphics areas are switchable to at least a different display plane, **characterized in that** a recognition circuit (2) is provided which area-wise checks the equality of a foreground color selected in the area and a background color selected in the area and which transparently switches those areas of the foreground and/or the background of the graphics in which a predetermined constellation of the selected foreground color and the selected background color is determined.

9. A circuit arrangement as claimed in claim 8, **characterized in that** the recognition circuit (2) transparently switches those areas of the foreground and/or the background of the graphics in which the same color is selected for the foreground and the background.

10. A circuit arrangement as claimed in claim 8, **characterized in that** the recognition circuit (2) determines changes of the selected foreground color and the selected background color between a first area and a neighboring, second area, and **in that** the recognition circuit transparently switches the foreground and/or the background dependent on the foreground and background colors selected for the first area and on the changes of the selected colors between the second and the first area.

## Revendications

1. Procédé de représentation de graphiques répartis en zones avec un avant-plan et un arrière-plan qui peuvent respectivement être commutés par zones sur une couleur à sélectionner et dans lequel les zones graphiques peuvent être commutées sur la transparence sur au moins un autre plan de représentation,
**caractérisé en ce**
**qu'**une comparaison de la couleur d'avant-plan sélectionnée dans la zone et d'une couleur d'arrière-plan sélectionnée dans la zone est effectuée par zone et que les zones de l'avant-plan et/ou de l'arrière-plan du graphique dans lesquelles une constellation préalablement déterminée de la couleur d'avant-plan sélectionnée et de la couleur d'arrière-plan sélectionnée est arrêtée sont commutées sur la transparence.

2. Procédé selon la revendication 1, **caractérisé en ce**
**que** les zones de l'avant-plan et/ou de l'arrière-plan du graphique dans lesquelles la même couleur est respectivement sélectionnée pour l'avant-plan et l'arrière-plan sont commutées sur la transparence.

3. Procédé selon la revendication 1, **caractérisé en ce**
**que** les changements de la couleur d'avant-plan sélectionnée et de la couleur d'arrière-plan sélectionnée entre une première zone et une deuxième zone voisine de celle-ci sont déterminés et qu'en fonction des couleurs de l'avant-plan et de l'arrière-plan sélectionnées pour la première zone et des changements des couleurs sélectionnées entre les deuxième et première zones, une décision est prise quant à la commutation sur la transparence de l'avant-plan ou de l'arrière-plan.

4. Procédé selon la revendication 3, **caractérisé en ce**
**que**, dans une première zone, l'avant-plan est commuté sur la transparence lorsque la couleur d'avant-plan sélectionnée pour cette zone a changé par rapport à la couleur d'avant-plan sélectionnée pour une couleur d'avant-plan sélectionnée pour une deuxième zone voisine et que, dans la première zone, elle est identique à la couleur d'arrière-plan sélectionnée de cette zone.

5. Procédé selon la revendication 3, **caractérisé en ce**
**que**, dans une première zone, l'arrière-plan est commuté sur la transparence lorsque la couleur d'arrière-plan sélectionnée pour cette zone a changé par rapport à la couleur d'arrière-plan sélectionnée pour une deuxième zone voisine et, lorsque, dans la première zone, elle est identique à la couleur d'avant-plan sélectionnée de cette zone.

6. Procédé selon la revendication 3, **caractérisé en ce**
**que**, dans une première zone, l'avant-plan et l'arrière-plan sont commutés sur la transparence lorsque les couleurs sélectionnées pour cette zone pour l'avant-plan et l'arrière-plan ont changé par rapport aux couleurs sélectionnées pour une deuxième zone voisine et que les couleurs sélectionnées pour la première zone sont identiques pour l'avant-plan et l'arrière-plan.

7. Procédé selon la revendication 1, **caractérisé en ce**
**que** le graphique est un texte vidéo pour les signes duquel des couleurs d'avant-plan peuvent être sélectionnées, les signes du texte vidéo pouvant être représentés devant un arrière-plan dont la couleur peut être sélectionnée comme couleur d'arrière-plan et qu'un signal d'image peut être représenté sur l'autre plan de représentation.

8. Circuit de représentation de graphiques répartis en zones avec un avant-plan et un arrière-plan qui peuvent respectivement être commutés par zones sur une couleur à sélectionner ou sur la transparence, les zones graphiques commutées sur la transparence pouvant être commutées sur au moins un autre plan de représentation, **caractérisé en ce**
**qu'**il est prévu un circuit de reconnaissance (2) qui effectue par zones un contrôle de l'égalité d'une couleur d'avant-plan sélectionnée dans la zone et d'une couleur d'arrière-plan sélectionnée dans la zone et qui commute sur la transparence les zones de l'avant-plan et/ou de l'arrière-plan du graphique dans lesquelles une constellation prédéterminée de la couleur d'avant-plan sélectionnée et de la couleur d'arrière-plan sélectionnée est constatée.

9. Circuit selon la revendication 8, **caractérisé en ce**
**que** le circuit de reconnaissance (2) commute sur la transparence les zones de l'avant-plan et/ou de l'arrière-plan du graphique dans lesquelles la même couleur a respectivement été sélectionnée pour l'avant-plan et l'arrière-plan.

10. Circuit selon la revendication 8, **caractérisé en ce**
**que** le circuit de reconnaissance (2) constate les changements de la couleur d'avant-plan sélectionnée et de la couleur d'arrière-plan sélectionnée entre une première zone et une deuxième zone voisine de la première et que le circuit de reconnaissance, en fonction des couleurs de l'avant-plan et de l'arrière-plan sélectionnées pour la première zone et des changements des couleurs sélectionnées entre les deuxième et première zones, commute sur la transparence l'avant-plan et/ou l'arrière-plan.
